# EUROPEAN PATENT APPLICATION

(11) **EP 4 159 819 A1**
(43) Date of publication of application: **05.04.2023**
(21) Application number: 21306346.4
(22) Date of filing: 29.09.2021
(51) Int. Cl.: C09D 5/00, B64C 11/20, B64D 15/00, B64D 45/02, C09D 7/61, C09D 7/65, C09D 7/40, C09D 7/80, F01D 5/14, B05D 5/00, B05D 1/36

(54) **MULTI-FUNCTIONAL COMPOSITE COATING**

(71) Applicant: Ratier-Figeac SAS, 46101 Figeac Cedex (FR)
(72) Inventor: PICOT, Olivier, 46100 Figeac (FR); BEDEL, Vincent, 31400 Toulouse (FR)
(74) Representative: Dehns

(57) **Abstract**

The present disclosure provides a coated article, comprising: an article, and a coating applied to at least a part of said article, wherein said coating comprises a polymer matrix material, an inorganic filler, an organic filler, and a lamellar filler, and a method of preparing the same.

## Description

### Technical Field

The present disclosure relates to a multi-functional composite coating, for example one for use in propelling systems, gas turbine engines, or aeronautical applications, in particular on propeller blades, and a method for preparing an article coated with said coating.

### Background of the disclosure

Objects exposed to extreme environments, e.g. in conditions of high temperature and/or pressure, typically require some form of protection in order to have a useful life of an acceptable, e.g. in terms of cost or safety, duration. This is often achieved by the use of coatings. The protective properties of such coatings can be enhanced by the use of additives or fillers dispersed or embedded therein. For example, hard materials can be used to provide erosion resistance, and conductive fillers can be used to protect against high voltage events.

Extreme environments are encountered frequently in the aeronautical industry. For example, aeroplanes and their components are exposed to extremes of temperature and pressure. This is particularly true of components such as turbine blades in a gas turbine engine and propellers.

Propellers are often used in aeronautical applications. Propellers are formed of a hub and blades. The hub is rotated by means of a power source, and this movement of the hub causes the blades to spin. In modern aircraft, the rate of rotation is typically very high. This means that the propeller, and in particular the blades, are subjected to extremes of temperature and pressure when in use. Lightning strikes are also a problem when flying. Exposure to such harsh conditions can cause damage to the propeller blade, reducing its useful life.

For these reasons, articles such as propeller blades need to be protected. This is typically achieved by applying various coatings or layers to the article such as an anti-corrosion paint layer, and/or an anti-erosion topcoat. Other layers may also be present between the topcoat and the article, such as a glass fabric insulating layer and/or a metal foil, e.g. an expanded metal foil, (or metal grid/mesh) layer.

The topcoat usually contains fillers. Typically, a hard material such as silicon oxide is used as one of the fillers, as it protects the structure from erosion, while carbon black is used as an anti-static filler which helps to dissipate electrostatic build-up from air friction.

However, there can be problems with the conventional coatings. For example, even where there is a glass fabric insulating layer and an anti-corrosion paint layer between the topcoat and the expanded metal foil, galvanic corrosion can occur between the foil and the carbon black found in the topcoat. This can result in surface blistering, which can in turn reduce the integrity of the composite protective structure formed on the blade, thereby reducing its lifetime.

The present disclosure provides an alternative coating for an article which eliminates the above problem. Furthermore, because of the presence of additional fillers in the coating of the present disclosure, it is able to provide additional useful functionality, such as de-icing, without substantially increasing the weight of the article.

### Summary of the Disclosure

Viewed from a first aspect, the present disclosure provides a coated article comprising: an article, and a coating applied to at least a part of said article, wherein said coating comprises a polymer matrix material, an inorganic filler, an organic filler, and a lamellar filler.

The coating of the present disclosure may be viewed as a layer disposed upon the article, e.g. a layer of polymer matrix material comprising the fillers described herein, i.e. an inorganic filler; an organic filler; and a lamellar filler. Similarly, the coated article may be viewed as an article with the layer disposed on at least part of the article's surface. The present disclosure also provides an article coated with the coating described herein.

The article may be an aircraft component, a propeller, or a gas turbine engine component, for example a blade, for example a propeller blade or a fan blade.

The polymer matrix material may be or comprise a thermoset or a thermoplastic polymer (e.g. a polyurethane or epoxy polymer) or combinations or co-polymers thereof.

The polymer matrix material may have a Rockwell hardness on the B, C or M scale, e.g. M scale, of greater than or equal to 50, or greater than or equal to 60, or greater than or equal to 70, or greater than or equal to 80, or greater than or equal to 90, or greater than or equal to 100, or greater than or equal to 110, or greater than or equal to 120, or greater than or equal to 130, or greater than or equal to 140, or greater than or equal to 150.

The polymer matrix material may be present in an amount of greater than or equal to 50 vol.% of the coating (i.e. at least 50 vol.% of the coating is polymer matrix material), greater than or equal to 60 vol.% of the coating, greater than or equal to 70 vol.% of the coating, greater than or equal to 80 vol.% of the coating, or greater than or equal to 90 vol.% of the coating, or greater than or equal to 95 vol.% of the coating. In some embodiments, the volume fraction of polymer matrix material, in relation to the coating as a whole, is up to and including 99 vol.%.

The inorganic filler may have a specific hardness higher than or equal to 6 Mohs, e.g. higher than or equal to 8 Mohs.

The inorganic filler may be present in the coating in a volume fraction of up to and including 20%, or up to and including 15%, or up to and including 10%, or up to and including 5%, or up to and including 4%, or up to and including 3%, or up to and including 2%, or up to and including 1%. In some embodiments, the volume fraction of inorganic filler in relation to the coating as a whole is at least 0.5 vol.%.

The inorganic filler may be or comprise a ceramic material. The inorganic filler may be or comprise a metal oxide, a metal nitride, a metal boride, a metal carbide, a metal sulfide, or a ceramic metal composite, or combinations thereof. The inorganic filler may be or comprise a ceramic metal composite. The inorganic filler may be or comprise silicon oxide, silicon nitride and/or silicon carbide.

The inorganic filler may be in the form of particles, i.e. it may be in particulate form when added to the coating and/or may be present in the final coating in particulate form, e.g. as particles dispersed throughout the polymer matrix. The inorganic filler may be in the form of spherical particles, lamellar particles or rod-like particles. The inorganic filler may be or comprise ceramic particles.

The inorganic filler particles may be or comprise substantially spherical particles, e.g. spherical particles.

The inorganic filler particles may have a lamellar (e.g. flake-like) shape.

The inorganic filler particles may have a rod-like or fibrous shape (e.g. they may be fibres or filaments).

The particles (e.g. the spherical or substantially spherical particles) may have a primary (and optionally also secondary) aspect ratio of 20 or less, e.g. 1 to 20, 10 or less, e.g. 1 to 10, 5 or less, e.g. 1 to 5, or 1 to 2, e.g. around 1.

The inorganic filler particles (e.g. the lamellar inorganic filler particles) may have a primary aspect ratio of 100 or less, for example 90 or less, for example 80 or less, for example 70 or less, for example 60 or less. Exemplary ranges of primary aspect ratio include 2-100, 3-90, 4-80, 5-70 and 10-60.

The inorganic filler particles (e.g. the rod-like or fibrous inorganic particles) may have a primary aspect ratio of greater than or equal to 20, for example greater than or equal to 30, for example greater than or equal to 40, for example greater than or equal to 50. Exemplary ranges of primary aspect ratio include 20-1000, 30-500, 40-200 and 50-100.

The inorganic filler particles may have a primary aspect ratio of 1-1000, or 5-1000, e.g. 10-500 or 10-100, for example 20-70, 30-60 or 40-50.

Inorganic filler particle size may be selected according to the article to be coated. Typical particle sizes for the smallest dimension are 0.5 nm to 2 µm, e.g. 1 nm to 1 µm, or 2 nm to 0.5 µm. Typical particle sizes for the largest dimension are 0.5 to 200 µm, e.g. 1 to 100 µm, or 2 to 50 µm.

The inorganic filler may be or comprise SiC, SiO₂, MoS₂ or combinations thereof.

The organic filler may be or comprise a polymer, for example a hydrophobic polymer, e.g. selected from the group consisting of acrylics, epoxies, polyalkenes (such as polyethylene and polypropylene), polystyrene, polyvinylchloride, polydimethylsiloxane, polyesters, and fluoropolymers, e.g. poly(tetrafluoroethylene).

The organic filler may be or comprise poly(propylene) or a fluoropolymer, e.g. poly(tetrafluoroethylene).

The organic filler may be in the form of polymer beads or particles. The organic filler may be in particulate form when added to the coating and/or may be present in the final coating in particulate form, e.g. dispersed as particles throughout the polymer matrix.

The organic filler particles may be substantially spherical particles, e.g. spherical particles.

The organic filler particles may have a lamellar (e.g. flake-like) shape.

The organic filler particles may have a rod-like or fibrous shape (e.g. they may be fibres or filaments).

The particles (e.g. the spherical or substantially spherical particles) may have a primary (and optionally, also secondary) aspect ratio of 20 or less, e.g. 1 to 20, 10 or less, e.g. 1 to 10, 5 or less, e.g. 1 to 5 or 1 to 2, e.g. around 1.

The organic filler particles (e.g. the lamellar organic filler particles) may have a primary aspect ratio of 100 or less, for example 90 or less, for example 80 or less, for example 70 or less, for example 60 or less. Exemplary ranges of primary aspect ratio include 2-100, 3-90, 4-80, 5-70 and 10-60.

The organic filler particles (e.g. the rod-like or fibrous inorganic particles) may have a primary aspect ratio of greater than or equal to 20, for example greater than or equal to 30, for example, greater than or equal to 40, for example greater than or equal to 50. Exemplary ranges of primary aspect ratio include 20-1000, 30-500, 40-200 and 50-100.

The organic filler particles may have a primary aspect ratio of 1-1000 or 5-1000, e.g. 10-500 or 10-100, for example 20-70, 30-60 or 40-50.

Organic filler particle (e.g. polymer bead) size may be selected according to the article to be coated. The organic filler particles have a smallest dimension and a largest dimension. Typical particle sizes for the smallest dimension are 0.5 nm to 2 µm, e.g. 1 nm to 1 µm, or 2 nm to 0.5 µm. Typical particle sizes for the largest dimension are 0.5 to 200 µm, e.g. 1 to 100 µm, or 2 to 50 µm.

The lamellar filler may be or comprise a carbon-based lamellar filler (such as graphene nanoplatelets), ceramic particles having a metal-oxide coating, a layered silicate, a layered phosphate, or combinations thereof.

The lamellar filler may be or comprise a carbon-based lamellar filler present in a volume fraction of from 0.2 to 5 vol.%, e.g. 0.2 to 2.0 vol.%, of the coating.

The coating, e.g. the polymer matrix thereof, may further comprise a coupling agent such as a silane-based additive. Such an additive may be mixed or blended with the polymer matrix material.

The inorganic filler may be or comprise silicon carbide, the organic filler may be or comprise poly(propylene) or a fluoropolymer, and the lamellar filler may be or comprise graphene nanoplatelets.

In another aspect, the present disclosure provides a method of preparing a coated article, e.g. one as described herein, said method comprising providing an article and coating at least a part of said article with a coating as defined herein.

The method may comprise coating the article with a polymer matrix material or precursor thereto in which an inorganic filler, an organic filler and a lamellar filler have been dispersed, and, optionally, polymerizing and/or curing said polymer precursor.

The method may comprise coating the article with a polymer matrix material or precursor thereto, depositing one or more fillers selected from an inorganic filler, an organic filler, and a lamellar filler onto the polymer matrix material or precursor thereto, depositing a further layer of polymer matrix material or precursor thereto, and, optionally, polymerizing and/or curing said polymer precursor.

It will be readily appreciated by the skilled person that the various optional and preferred features of the disclosure as described above may be applicable to all the various aspects of the disclosure discussed. For example, features disclosed in connection with the article may be applicable to the method, and vice versa.

### Brief description of the Figure

Certain preferred aspects of the present disclosure will now be described in greater detail, by way of example only and with reference to the accompanying drawing, in which:

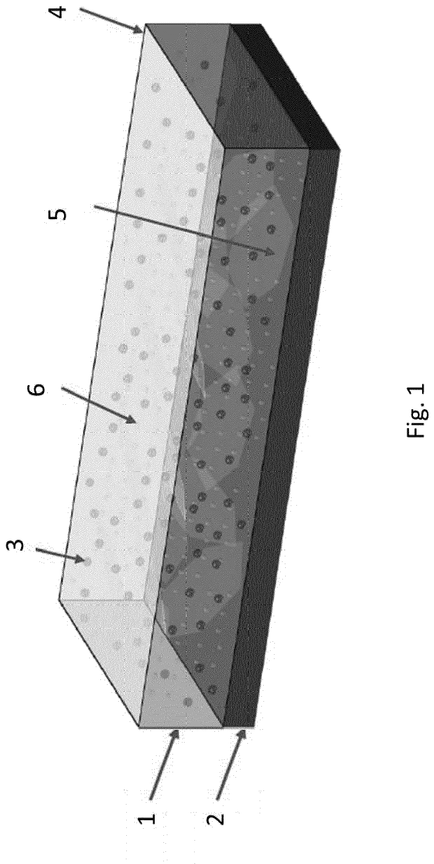

Figure 1 shows a schematic of a coating, e.g. a multifunctional composite coating, according to the present disclosure.

### Detailed description

The present disclosure provides a coated article. The article can be, for example, an aircraft component, a propeller, or a gas turbine engine component. The article may be one suitable for use in a propelling system. The article may be a blade, for example a propeller blade or a fan blade. The coating may only be on a part of the article, for example on a particular surface or part of the surface of the article, or it may coat substantially all of the article or the surface of the article. Suitable locations on the article for the coating will be apparent to the skilled person and may be selected depending on the intended use of the article. Typically, the coating may cover substantially all of the surface of the blade, e.g. it may cover both sides of the blade.

The coating of the present disclosure comprises a polymer matrix and the fillers described herein. The fillers may be dispersed throughout, or embedded in, the matrix. The fillers may be dispersed homogenously, or there may be a concentration gradient of one or more types of filler across the matrix or a region thereof. In some embodiments, all of the types of filler are dispersed homogenously throughout the matrix. In some embodiments, one or more of the filler types are dispersed homogenously throughout the matrix. In some embodiments, one or more of the filler types, for example the lamellar filler, are concentrated towards the article side of the coating, e.g. the inner surface of the coating. In some embodiments, one or more of the filler types is concentrated towards the side of the coating opposing the article, e.g. the outer surface of the coating.

The coating thickness may be selected depending on the intended use of the article. In some embodiments, the thickness of the coating may vary across the coating, although it will typically be substantially uniform in thickness. Coating thicknesses may range from 0.5 to 750 µm, e.g. 1 to 500 µm, e.g. from 5 to 400 µm, from 10 to 300 µm, from 25 to 200 µm, from 50 to 100 µm.

The polymer matrix can comprise, e.g. be formed of, a thermoset polymer or a thermoplastic polymer, i.e. the polymer matrix material may be or comprise a thermoset polymer or a thermoplastic polymer. Examples of suitable thermosets include: allyl resin, epoxy, melamine formaldehyde, phenol-formaldehyde plastic, polyester, vinyl ester, cyanate ester, polyimide, polyurethane, and silicone. Examples of suitable thermoplastics include: polyacrylic acid, poly(methyl methacrylate), acrylonitrile butadiene styrene, polyamide, polylactic acid, polybenzimidazole, polycarbonate, polyether sulfone, polyalkenes (such as polyethylene and polypropylene), polyphenylene oxide, polyphenylene sulphide, polystyrene, polyvinyl chloride, polyvinylidene fluoride, fluoropolymer (e.g. polytetrafluoroethylene), ethylene vinyl alcohol, liquid crystal polymer, polyacetal, polyacrylonitrile, polyamide-imide, polyaryletherketone, polybutadiene, polybutylene, polyketone, polyester, polyetheretherketone, polyetherimide, polyethersulfone, polyethylenechlorinates, polyimide, polymethylpentane, polysulfone, polyurethane, polyvinylidene chloride and thermoplastic elastomers. Mixtures or copolymers of any of these polymers may also be used as the polymer matrix material.

The polymer matrix material may have a high hardness. Typically, the polymer matrix material may have a Rockwell hardness (e.g. on the B, C or M scale, typically M scale) of greater than or equal to 50, or greater than or equal to 60, or greater than or equal to 70, or greater than or equal to 80, or greater than or equal to 90, or greater than or equal to 100, or greater than or equal to 110, or greater than or equal to 120, or greater than or equal to 130, or greater than or equal to 140, or greater than or equal to 150. The polymer matrix may have a Shore D hardness of greater than or equal to 40, greater than or equal to 50, greater than or equal to 60, greater than or equal to 70, greater than or equal to 80, or greater than or equal to 90.

The polymer may have a large strain at break, also known as elongation at break. The strain or elongation at break may be greater than or equal to 100%, or greater than or equal to 200%.

The polymer matrix material may be present in the coating in an amount greater than or equal to 50 vol.% of the coating (i.e. at least 50 vol.%, e.g. 50 to 99 vol.% of the coating is matrix), greater than or equal to 60 vol.% of the coating, greater than or equal to 70 vol.% of the coating, greater than or equal to 80 vol.% of the coating, or greater than or equal to 90 vol.% of the coating, or greater than or equal to 95 vol.% of the coating. In some embodiments, the volume fraction of polymer matrix material, in relation to the coating as a whole, is up to and including 99 vol.%.

The shape of the filler particles described herein may be defined in terms of aspect ratios. In this context, the primary aspect ratio refers to the ratio of the maximum dimension to the minimum dimension, i.e. the largest dimension divided by the smallest dimension, for example, the length (or width) of the particle divided by its thickness. This is often called the "length-to-thickness" aspect ratio. For example, the smallest dimension for a rod-like particle will usually be the diameter or width of the cross-section, and the largest will be the length of the rod or fibre.

Another aspect ratio, which may be termed the secondary aspect ratio, can also be calculated by taking the ratio of the maximum, i.e. largest, dimension to the second largest dimension. For example, a rectangular sheet with a length of 200 µm, a width of 100 µm and a thickness of 1 µm would have a primary aspect ratio of 200 and a secondary aspect ratio of 2. For perfectly spherical particles, both aspect ratios are 1.

The largest dimension is typically the length of the longest straight line which can be drawn across the particle. This may be taken to align with the longitudinal axis of the particle. The smallest dimension may be substantially perpendicular to the longitudinal axis (and therefore the largest dimension) and the second largest dimension may be substantially perpendicular to both the longitudinal axis (and therefore the largest dimension) and the smallest dimension. In other words, the largest dimension, the smallest dimension and the second largest dimension can be mutually perpendicular and arranged along or parallel to the x, y and z axes (i.e. the longitudinal, vertical and transverse axes), respectively, of a Cartesian coordinate system.

As there will be some particle size variation within a sample of particulate materials, the particle sizes and aspect ratios (both primary and secondary) mentioned herein may also relate to average, e.g. mean, particle dimensions. Thus, particle sizes for the largest dimension may refer to the average of the largest dimensions of the various particles. Typically, the particles used for each type of filler independently will be substantially uniform in shape and size.

The average primary aspect ratio may be calculated by taking the ratio between the average of the largest dimensions of the various particles and the average of the smallest dimensions of the various particles. Alternatively the primary aspect ratio may be measured for each individual particle (or a selection of particles), and the sum of these aspect ratios divided by the total number of particles to provide an average primary aspect ratio. The average secondary aspect ratio may be calculated in similar ways, i.e. using the largest and second-largest dimensions.

Particle sizes, dimensions (length, width and thickness or height) and aspect ratios (and therefore averages thereof) may be measured by methods known in the art, for example microscopy techniques such as optical microscopy, scanning electron microscopy (SEM), transmission electron microscopy (TEM), atomic force microscopy (AFM), or dynamic light scattering (DLS). An exemplary SEM method which is suitable for use in the present disclosure is described in Daniel P. Veghte & Miriam Arak Freedman (2014) Facile Method for Determining the Aspect Ratios of Mineral Dust Aerosol by Electron Microscopy, Aerosol Science and Technology, 48:7, 715-724, DOI: 10.1080/02786826.2014.920484. In such a measurement method, each of the particles is imaged in top-down and side-on configuration. In this context, top-down refers to standard SEM configuration, and side-on imaging is achieved by placing the substrates in a perpendicular orientation at an angle of 5° with respect to normal. The top-down and side-on images are analysed using a suitable software package, such as ImageJ (National Institutes of Health) or AxioVision (Zeiss), to determine the particle dimensions, and these can then be used to deduce the primary and secondary aspect ratios.

The coating comprises at least one inorganic filler. The inorganic filler may provide erosion resistance to the coating, thereby protecting the underlying article. The inorganic filler may therefore be an erosion-resistant filler. However, the inorganic filler may also fulfil other functions. The inorganic filler may have a specific hardness higher than or equal to 6 Mohs, or higher than or equal to 7 Mohs, or higher than or equal to 8 Mohs, or higher than or equal to 9 Mohs. The inorganic filler may be or comprise, for example, a ceramic material. The ceramic material may be or comprise a metal oxide, such as Al₂O₃, Cr₂O₃, Y₂O₃, ZrO₂, CeO₂, TiO₂, Ta₂O₅, SiO₂ and TaO₂, a metal nitride such as BN, TiN, ZrN, HfN, CrN, Si₃N₄, AIN, TiAIN, TiAICrN, TiCrN, TiZrN, a metal boride such as TiB₂, ZrB₂, Cr₃B₂, W₂B₂, AlB₂, a metal carbide such as TaC, WC, TiC, SiC or B₄C, a metal sulfide, such as MoS₂, or combinations thereof. The inorganic filler may additionally or alternatively be or comprise a ceramic-metal composite (cermet), including for example a metal matrix composite. Examples of cermets include WC/Co, WCoCr, WC/Ni, TiC/Ni, TiC/Fe, Ni(Cr)/Cr₃C₂, TaC/Ni and combinations thereof. In particular, the inorganic filler may be or comprise SiC, SiO₂ or MoS₂, or combinations thereof.

Carbides such as silicon carbide (SiC) are particularly useful as an inorganic filler as not only can they improve erosion resistance but they can also improve conductivity, conferring antistatic functionality upon the coating. Many such carbides have the black colouration of carbon black.

Sulphides such as molybdenum sulphide (MoS₂) can improve erosion resistance and conductivity and can confer hydrophobic properties upon the coating.

Oxides such as silicon dioxide (SiO₂) can impart erosion resistance and can also confer hydrophobic properties upon the coating.

In one embodiment, silicon carbide, molybdenum sulphide and silicon dioxide are used in combination as the inorganic filler.

As described herein, the inorganic filler may comprise approximately substantially spherical, e.g. spherical, rod-like or lamellar particles.

The volume fraction of inorganic filler in relation to the coating as a whole may be lower than or equal to 20 vol.%, lower than or equal to 15 vol.%, lower than or equal to 10 vol.%, lower than or equal to 5 vol.%, or lower than or equal to 4 vol.%, or lower than or equal to 3 vol.%, or lower than or equal to 2 vol.%, or lower than or equal to 1 vol.% of the coating. In some embodiments, to prevent embrittlement of the composite, i.e. the coating as herein described, values of lower than 5 vol.% may be most suitable. In some embodiments, the volume fraction of inorganic filler in relation to the coating as a whole is at least 0.5 vol.%.

The coating comprises at least one organic filler, e.g. a hydrophobic organic material. The organic filler may confer hydrophobicity on the surface of the coating, such that it provides a de-icing functionality. However, the organic filler may also fulfil other functions.

The organic filler may be or comprise a polymer, e.g. a hydrophobic polymer. A hydrophobic polymer is a polymer that is relatively insoluble (e.g. not soluble) in water or other polar solvents. The polymer, e.g. hydrophobic polymer, may be selected from the group consisting of acrylics, epoxies, polyalkenes (such as polyethylene and polypropylene), polystyrene, polyvinylchloride, polydimethylsiloxane, polyesters, poly(propylene) and fluoropolymers, and co-polymers thereof, in particular poly(propylene) (PP) and a fluoropolymer. Organic filler polymers may be added to the polymer matrix material to form a biphasic or polyphasic system, either as particles, e.g. in the form of polymer beads, or as a melt/solvent blended with the polymer matrix material.

When the organic filler is included as particles, it can remain in particulate form in the final coating, or it can mix with the matrix polymer.

The organic filler may be mixed with the matrix polymer, e.g. as liquid/melt.

Polymer beads can be readily formed using methods known to the person skilled in the art or obtained from commercial suppliers.

Organic fillers with a low surface energy can improve the hydrophobic behaviour of the coating because they lower the surface energy of the coating itself. This improvement in hydrophobicity limits water and ice build-up on the surface of the coating due to the lotus effect, thereby providing the coating with a de-icing functionality. In some embodiments, the organic filler is homogenously distributed throughout the matrix polymer. In this way, the organic filler is present at the outer surface of the coating, i.e. the surface opposing the coated article, even if the coating is subjected to erosion. In some embodiments, the organic filler is present on, or close to, the surface of the matrix. When the organic filer is located or positioned on or close to the surface of the matrix, it may impart hydrophobicity to the outer surface of the coating, i.e. the surface opposing the coated article.

When the organic filler is a polymer, it is typically a different polymer to that of the matrix material.

The organic filler may be present in an amount of up to and including 10 vol.%, or up to and including 5 vol.%, or up to and including 4 vol.%, or up to and including 3 vol.%, or up to and including 2 vol.%, or up to and including 1 vol.% of the coating. In some embodiments, the volume fraction of organic filler in relation to the coating as a whole is at least 0.5 vol.%.

The coating comprises at least one lamellar filler, e.g. a filler material which is in the form of sheets, flakes or platelets. Lamellar fillers are often referred to as 2D particles, as opposed to fibrous, tubular, rod-like, or fibre-like particles, which are typically considered 1D particles. The lamellar filler may therefore be a 2D filler.

The lamellar filler material and/or particles may be made up of a layered material, i.e. a material which contains one or more layers stacked over one another, i.e. a series of thin layers, for example where each layer has a thickness of less than or equal to 10 nm, in particular around 1 nm. The lamellar fillers can thus also be termed "layered filler".

The lamellar fillers can be in the form of sheets, flakes, ribbons or platelets.

The lamellar filler may provide antistatic functionality to the coating, for example when the lamellar filler is conductive, e.g. has a conductivity of at least 10⁻⁶S.m⁻¹. Additionally or alternatively, the lamellar filler may fulfil the function of anti-corrosion.

Lamellar materials can self-assemble in multilayer structures. In the context of the coating described herein, lamellar filler particles may lie predominantly flat in or are aligned with the plane of the coating, e.g. their longest dimension may lie parallel to the surface of the article. In this way, the lamellar filler particles may lie in substantially the same plane as one another in the coating. This can permit only limited gas or moisture to permeate the structure. The layered structure formed by the lamellar filler in the matrix increases tortuosity which impedes small molecule diffusion through the coating. The layered structure also reduces crack propagation through the composite. Limited crack propagation in combination with the barrier effect results in less electrolyte diffusion to the expanded metal foil and therefore improved corrosion resistance, e.g. of any metal foil and of the underlying article.

The lamellar filler may be in the form of particles. The lamellar filler particles (e.g. flakes, sheets, ribbons or platelets) may have a primary aspect ratio of 50 to 1000, e.g. 100 to 900, for example 200 to 800, for example 300 to 700, for example 400 to 600, for example 450 to 500, and/or a secondary aspect ratio of 1 to 10, for example 1 to 5, for example 1 to 4, for example 1 to 3, for example 1 to 2, for example 1.

The largest dimension of the particles of lamellar filler, typically the length, may be below or equal to 300 µm, for example below or equal to 250 µm, for example below or equal to 200 µm, for example below or equal to 150 µm, for example below or equal to 100 µm, for example below or equal to 50 µm. In some embodiments, the largest dimension of the particles of lamellar filler is at least 0.5 µm. In some embodiments, the largest dimension of the particles of lamellar filler is 0.5 - 300 µm, for example 1 - 250 µm, for example 5 - 200 µm, for example 10 - 150 µm, for example 10 - 100 µm, for example 1 - 50 µm.

The second largest dimension of the particles of lamellar filler, typically the width, may be below or equal to 300 µm, for example below or equal to 250 µm, for example below or equal to 200 µm, for example below or equal to 150 µm, for example below or equal to 100 µm, for example below or equal to 50 µm, for example below or equal to 30 µm. In some embodiments, the second largest dimension of the particles of lamellar filler is at least 0.5 µm. In some embodiments, the second largest dimension of the particles of lamellar filler is 0.5 - 300 µm, for example 1 - 250 µm, for example 5 - 200 µm, for example 10 - 150 µm, for example 10 - 100 µm, for example 1 - 50 µm, for example 0.5 - 30 µm.

The thickness (e.g. the smallest dimension) of the lamellar filler may be below or equal to 1 µm, for example 0.5 nm to 1 µm, or 0.5 nm to 500 nm, for example 0.5 nm to 100 nm or 10 nm to 100 nm.

The lamellar filler may be present in a volume fraction of lower than or equal to 5%, or lower than or equal to 4%, or lower than or equal to 3%, or lower than or equal to 2%, or lower than or equal to 1% in the coating. For example, the volume fraction of the lamellar filler in the coating may be in the range from 0.1 to 5 vol.%, e.g. 0.2 to 2 vol.%.

The lamellar filler may be or comprise, e.g. may be in the form of, ceramic particles having a metal-oxide coating. The metal-oxide coating may be electrically conductive. For example, ceramic particles, for example mica, may be coated with a layer of antimony tin oxide (Sb:SnO₂) or antimony-doped tin oxide to provide electrical conductivity.

Materials such as graphene, layered silicate and layered phosphates which constitute atomically thin layers are particularly effective lamellar fillers due to their large primary aspect ratio, low permeability, and surface chemistry. In some embodiments, layered particles are arranged in a layered structure down to the atomic level.

The lamellar filler can be a carbon-based lamellar filler. Examples of the carbon-based lamellar fillers include graphene-based fillers, e.g. graphene, graphene oxide, reduced graphene oxide, graphene nanoplatelets, graphene nanoribbons and expanded graphite. The volume fraction of the carbon-based lamellar filler in the coating may be in the range from 0.1 to 5 vol.%, e.g. 0.2 to 2 vol.% or 0.5 to 1 vol.%. The presence of a carbon-based lamellar filler in the polymer matrix allows for conductivities of higher than or equal to 10⁻⁶ S/m, which is sufficient to readily disperse electrostatic charges, thereby providing antistatic functionality to the coating.

The lamellar filler may be or comprise a layered silicate, e.g. those made up of two-dimensional layers of fused silicate tetrahedral sheets. The sheets may be approximately 1 nm thick and 100 nm to 1000 nm long, and fused to an edge-shared octahedral sheet of metal atoms. Examples of layered silicates include montmorillonite, smectites, such as saponite, hectorite, fluorohectorite, fluoromica, kaolinite, magadiite, vermiculite and layered double hydroxides. The lamellar filler material may be or comprise a clay.

The lamellar filler may be or comprise a layered phosphate. Layered phosphates have a similar structure to layered silicates, except the phosphate group replaces the silicate. An example of a layered phosphate is alpha-zirconium phosphate, which has the chemical formula of Zr(HPO₄)₂.nH₂O. Alpha-zirconium phosphate can be formed into nanoplatelets. Layered phosphates can also be formed from zinc phosphate and calcium phosphate.

A coupling agent, for example a silane-based additive, can be added to the coating, e.g. to the polymer matrix, to improve the compatibility of the fillers with the polymer matrix. Such agents may also control the organisation of the fillers throughout the polymer matrix, i.e. they may influence the location and/or orientation of each type of filler. In the case of silane-based additives, this improvement is obtained because one part of the silane-based additive has good affinity with the matrix, and the other part has good affinity with the fillers.

An example of a silane-based additive is a polysilane. Polysilanes are organosilicon compounds with the formula (R₂Si)ₙ, where R can be a group such as amine, alkyl, alkoxy, aryl and alkenyl, either substituted or unsubstituted. Another example of a silane-based additive is silane compounds with the formula SiR₄, where R can be a group such as amine, alkyl, alkoxy, aryl and alkenyl, either substituted or unsubstituted. For example, where the polymer matrix is epoxy-based, the silane-based additive may be or comprise a glycidyl based organosilane. Other examples include amino-silanes and their derivatives, such as amine-terminated polysiloxane, and/or epoxy terminated silanes. Specific examples include (3-glycidyloxypropyl)trimethoxysilane, (3-aminopropyl)trimethoxysilane, (3-aminopropyl)triethoxysilane, and poly(dimethylsiloxane), bis(3-aminopropyl) terminated.

The coupling agent, e.g. silane-based additive, may have a volume fraction of lower than or equal to 5%, or lower than or equal to 4%, or lower than or equal to 3%, or lower than or equal to 2%, or lower than or equal to 1% in the coating. In some embodiments, the coupling agent may have a volume fraction of at least 0.1 %.

The term "lamellar" in terms of particle shape is intended to encompass "flat" filler particles, i.e. those in which one dimension is substantially smaller than the other two dimensions (or two are substantially larger than one), such as sheets, flakes, ribbons or platelets. Such fillers or particles are often referred to as 2D fillers or particles, due to one dimension being substantially smaller than the other two.

1D fillers or particles is a term used for those in which one dimension is substantially larger than the other two dimensions. Fibrous, tubular, rod-like, or fibre-like particles are commonly known as 1D particles.

Figure 1 shows a specific example of the coating according to the present disclosure. In this example, the coating (1) is disposed on an article (2), but other layers may be present between the coating (1) and the article (2), such as an expanded metal foil layer, a glass fabric layer, and/or a layer of primer and/or anti-corrosion paint. Spherical SiC, SiO₂ and MoS₂ particles are present as the inorganic filler (3) and are dispersed throughout the polymer matrix (4), which contains a silane-based additive. Lamellar fillers (5) such as graphene nanoplatelets are present and have self-assembled to form a layer towards the base of the polymer matrix (i.e. closest to the substrate), while polymer beads (such as beads of poly(propylene) and/or fluoropolymer, e.g. poly(tetrafluoroethylene)) as organic fillers (6) are present throughout the polymer matrix.

The combination of fillers described herein provides a multifunctional coating which avoids the need for multiple layers and the associated costs and manufacturing complexity. The coating of the present disclosure may therefore be viewed, or referred to, as a composite coating, e.g. a multi-functional composite coating.

In contrast to coating systems which incorporate multiple layers, the present disclosure provides a composite coating/layer which can eliminate the need for multiple interlayers, thus resulting in a smaller or lighter final product (e.g. the coated article). Elimination of the multiple interlayers also achieves cost savings due to the time and cost of applying multiple interlayers being avoided. Moreover, poor adhesion between various layers is a drawback of the currently used methods. In particular, adhesion failures at the interface between layers is a problem. The reduction in layers achievable by the present disclosure therefore reduces the likelihood of failure of the article. It will be appreciated that in aerospace applications, failure of the component may represent a significant safety hazard.

Without wishing to be bound by theory, the functionalities of the fillers and their contribution to the overall properties of the coating described herein may be related to the nature of the fillers, their shape and the organisation of the fillers in the matrix (e.g. the way in which the fillers are dispersed throughout the matrix). The latter may be related to a filler's surface area in contact with the matrix.

The lamellar fillers may improve fatigue performance via a stick slip mechanism which increases toughness and dampening. The inorganic fillers can provide anti-erosion and antistatic functionality, the organic fillers can provide de-icing functionality, and the lamellar filler can provide anti-static and anti-corrosion functionality. Combinations and configurations of the present disclosure can have a synergistic effect. The multifunctional nature of the coating exhibits advantages such as reduced weight, costs savings and increased simplicity of manufacture.

While further coatings may be applied on top of the coating of the present disclosure, the coating of the present disclosure is typically the outermost layer, i.e. it is exposed to air. As mentioned above in the context of the specific example of Figure 1, but which applies more generally to the present disclosure, other layers may be present between the article, e.g. the propeller or fan blade, and the coating of the present disclosure.

For example, the article may be coated with a metal layer, e.g. metal film, expanded metal foil or mesh layer, for example aluminium, copper, bronze, nickel, gold, or titanium, in particular aluminium. Such a metal layer may be located between the surface of the article and the coating of the present disclosure. The metal layer, because of its antistatic properties, is able to offer protection against lightning strikes.

A further optional layer is a layer of glass fabric which, when present, is typically applied on the surface of the metal layer opposite the article. This layer may serve to insulate the metal layer from other coatings, e.g. from the coating of the present disclosure.

A layer of primer and/or anti-corrosion paint may be applied to the glass fabric. This may provide added corrosion protection, e.g. to the metal layer. Primer may be used to improve adhesion of any subsequently deposited layers.

In certain embodiments, there are no layers between the article surface and the coating of the present disclosure, i.e. the coating of the present disclosure is located on the surface of the article. In some embodiments, the coated article consists of the article and the coating herein described. In some embodiments, the coating described herein forms the outermost surface of the coated article. In certain embodiments, further coatings or layers are provided on the surface of the coating, i.e. the coating as described herein is not the outermost surface of the coated article.

The coating may be applied using methods known to those skilled in the art. The present disclosure thus also provides a method of preparing a coated article, e.g. as described herein, said method comprising providing an article and coating at least a part of said article with a coating as herein described.

The coating step may be performed by spraying. Any suitable spraying method, such as spray painting, may be used. Suitable spraying methods include air gun spraying (e.g. high volume low pressure or low volume low pressure) and airless gun spraying. Spray painting can be performed using a spray gun or an airbrush.

A spray gun used in air gun spraying has one or more nozzles, triggers, feedstock basins which contain feedstock (i.e. the material to be sprayed) and an air compressor. When the trigger is activated, the feedstock in the basin mixes with compressed air and generates a fine spray which can be directed at a substrate via the nozzle.

Alternatively, the coating can be applied using an airless spray gun. In an airless spray gun, the material to be applied as a coating is atomized by being subjected to a high pressure, and the atomized material is ejected via a nozzle at high pressure towards a substrate.

The coating may also be applied by painting.

In an embodiment, the coating is applied by depositing, e.g. spraying, the components of the coating, either individually or in combination, onto a surface of the article. This deposition is typically performed at room temperature.

The polymer matrix may be applied either as the polymer matrix material itself, or as a precursor thereto, i.e. a precursor to the polymer that forms the coating's matrix (the polymer matrix material).

An example of a polymer matrix material precursor is a plurality of monomers or a monomer composition, which may include a mixture of different monomers. Where the polymer matrix material is an epoxy polymer, suitable polymer matrix material precursors include polyepoxides mixed with a hardener such as polyfunctional amines, acids (and acid anhydrides), phenols, alcohols and thiols. Where the polymer matrix material is polyurethane, suitable polymer matrix material precursors include isocyanates mixed with one or more polyols. Where the polymer matrix material is unsaturated polyester, suitable polymer matrix material precursors include polyols such as glycols including ethylene glycol, propylene glycol, and diethylene glycol mixed with acids such as phthalic acid, isophthalic acid, terephthalic acid, and maleic anhydride.

Where the polymer matrix is applied as the polymer matrix material itself, it may be dissolved in a suitable solvent, in which case it is the solution of polymer matrix material which is applied to the surface of the article. Suitable solvents will be known to the person skilled in the art and include ketones, such as butanone, also known as methyl ethyl ketone (MEK), alcohols, such as ethanol and butanol, and glycol ethers, such as 2-butoxyethanol, and combinations thereof. Other examples of suitable solvents which may be used additionally or alternatively to those mentioned above include mineral spirits, turpentine, naphtha, toluene, dimethylformamide (DMF), ethylbenzene, xylene, n-butyl acetate, and combinations thereof.

A polymer film may be obtained after evaporation/removal of the solvent, e.g. by the application of heat. After deposition, the matrix material may be polymerised and/or cured. Curing can be accelerated by heating, e.g. by using an oven. The exact conditions used for curing vary depending on the selected polymer matrix material, and would be known to the person skilled in the art.

In one embodiment, one or more of the fillers are mixed with the polymer matrix material or precursor, and the resulting mixture applied to the article to form the coating. In this way, a coating in which the fillers are homogenously distributed throughout the matrix can be obtained.

In some embodiments, the method as described herein comprises providing an article; coating said article with a polymer matrix material or precursor thereto in which an inorganic filler, an organic filler and a lamellar filler have been dispersed (e.g. by mixing); e.g. to form a coating as described herein (on the article). The method optionally comprises polymerizing and/or curing said precursor. The coating comprises the fillers dispersed or embedded in the polymer matrix.

In some embodiments, lamellar filler particles, e.g. flakes, platelets or sheet-like particles, are dispersed in the polymer matrix material or precursor prior to application. Once this mixture comprising lamellar filler particles dispersed in the matrix polymer precursor is applied to the article, the lamellar filler particles may intrinsically self-arrange in the layer such that they lie predominantly flat in, i.e. are aligned with, the plane of the coating. The self-assembly process may be improved by the use of the coupling agents described herein.

In some embodiments, a first layer of polymer matrix material or precursor thereto could be applied to the article, e.g. by air gun spraying or painting, and then one or more of the fillers could be applied to the first polymer/precursor layer, and then further polymer/precursor applied over the one or more fillers. Further fillers could then be applied, followed by further applications of polymer/precursor until the desired coating is formed. The polymer precursor can then be polymerized, e.g. by curing. In this way, the fillers will be embedded in the resultant polymer matrix. In particular, the polymer/precursor may be applied using an air spray gun or an airbrush, and the fillers by an airless spray gun.

In some embodiments, the method as described herein comprises: providing an article; coating said article with a polymer matrix material or precursor thereto; depositing one or more fillers as herein described onto the polymer matrix material or precursor thereto; and depositing a further layer of polymer matrix material or precursor thereto. Further fillers may then be deposited (e.g. until the coating contains at least one of each type of filler), optionally followed by a further layer of polymer/precursor. The polymer/precursor may be polymerised and/or cured as appropriate, either following one or more of the deposition steps, or as a final step.

When the fillers are applied sequentially, the order of steps may be as follows:
(a) apply matrix polymer/precursor (to the article)
(b) apply lamellar filler
(c) apply matrix polymer/precursor
(d) apply organic filler
(e) apply matrix polymer/precursor
(f) apply inorganic filler
(g) apply matrix polymer/precursor
(h) cure and/or polymerise the matrix polymer/precursor.

The fillers may be applied in a different order to above, or two or more may be applied together. For example, the inorganic filler may be applied before the organic filler. If a coupling agent is used, this may be applied as the fillers are (i.e. at the same time and/or via the same method), or may be combined with the polymer matrix material (or its precursor) prior to deposition.

The matrix polymer precursor may be polymerized by curing.

A coated article produced by a method as herein described forms a further aspect of the present disclosure.

References to "comprises" and/or "comprising," should be understood to also encompass "consist(s) of", "consisting of", "consist(s) essentially of" and "consisting essentially of".

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It will be readily appreciated by the skilled person that the various optional and preferred features of the disclosure as described above may be applicable to all the various aspects of the disclosure discussed.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A coated article, comprising:
an article; and
a coating applied to at least a part of said article;
wherein said coating comprises:
a polymer matrix material;
an inorganic filler;
an organic filler; and
a lamellar filler.

2. The coated article of claim 1, wherein the article is an aircraft component.

3. The coated article of claim 1 or claim 2, wherein the polymer matrix material is a thermoset or a thermoplastic polymer.

4. The coated article of any one of the preceding claims, wherein the polymer matrix material has a Rockwell hardness on the M scale of greater than or equal to 50.

5. The coated article of any one of the preceding claims, wherein the inorganic filler has a specific hardness higher than or equal to 6 Mohs.

6. The coated article of any one of the preceding claims, wherein the inorganic filler is ceramic particles.

7. The coated article of any one of the preceding claims, wherein the inorganic filler is SiC, SiO₂, MoS₂ or combinations thereof.

8. The coated article of any one of the preceding claims, wherein the organic filler is a hydrophobic polymer.

9. The coated article of any one of the preceding claims, wherein the organic filler is in the form of polymer beads.

10. The coated article of any one of the preceding claims, wherein the lamellar filler is or comprises a carbon-based lamellar filler, ceramic particles having a metal-oxide coating, a layered silicate, a layered phosphate, or combinations thereof.

11. The coated article of any one of the preceding claims, wherein the coating, e.g. the polymer matrix thereof, further comprises a silane-based additive.

12. The coated article of any one of the preceding claims, wherein the inorganic filler is or comprises silicon carbide, the organic filler is or comprises poly(propylene) or a fluoropolymer, and the lamellar filler is or comprises graphene nanoplatelets.

13. A method of preparing a coated article, e.g. one according to any one of claims 1-12, said method comprising:
providing an article; and
coating at least a part of said article with a coating as defined in any preceding claim.

14. The method of claim 13, said method comprising:
providing an article;
coating said article with a polymer matrix material or precursor thereto in which an inorganic filler, an organic filler and a lamellar filler have been dispersed; and, optionally,
polymerizing and/or curing said polymer precursor.

15. The method of claim 13, said method comprising:
providing an article;
coating said article with a polymer matrix material or precursor thereto;
depositing one or more fillers selected from an inorganic filler; an organic filler; and a lamellar filler onto the polymer matrix material or precursor thereto;
depositing a further layer of polymer matrix material or precursor thereto; and, optionally, polymerizing and/or curing said polymer precursor.
